(19) Europäisches Patentamt
European Patent Office
Office européen des brevets

(11) **EP 3 666 941 A1**

(12) **EUROPEAN PATENT APPLICATION**
published in accordance with Art. 153(4) EPC

(43) Date of publication:
**17.06.2020 Bulletin 2020/25**

(51) Int Cl.:
*D01F 6/50* [(2006.01)]          *B01J 20/12* [(2006.01)]
*C02F 1/28* [(2006.01)]

(21) Application number: **18855055.2**

(22) Date of filing: **29.08.2018**

(86) International application number:
**PCT/JP2018/032017**

(87) International publication number:
**WO 2019/049757 (14.03.2019 Gazette 2019/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.09.2017 JP 2017172644**

(71) Applicant: **Kuraray Co., Ltd.**
**Okayama 710-0801 (JP)**

(72) Inventors:
• **NONAKA, Yoshimi**
**Kurashiki-shi**
**Okayama 713-8550 (JP)**

• **ZUSHI, Hiroyuki**
**Kurashiki-shi**
**Okayama 713-8550 (JP)**
• **WASHITAKE, Yosuke**
**Kurashiki-shi**
**Okayama 713-8550 (JP)**
• **ENDO, Ryokei**
**Tokyo 100-8115 (JP)**

(74) Representative: **Müller-Boré & Partner**
**Patentanwälte PartG mbB**
**Friedenheimer Brücke 21**
**80639 München (DE)**

(54) **FIBERS BASED ON POLY(VINYL ALCOHOL)**

(57)    Fibers based on poly(vinyl alcohol) is composed of a poly(vinyl alcohol) polymer and a phyllosilicate. The fibers contain 30 to 400 parts by mass of the phyllosilicate per 100 parts by mass of the poly(vinyl alcohol) polymer. The fibers have a swelling degree of 200 to 600%.

FIG.1

**Description**

TECHNICAL FIELD

The present invention relates to fibers based on poly(vinyl alcohol) containing a phyllosilicate.

BACKGROUND ART

Phyllosilicates are a main component of clay minerals that are abundant in the Earth's surface layer, and are widely used as fillers for cosmetics, paper, etc. Because of their excellent adsorption properties, the phyllosilicates are especially used as, e.g., adsorbents for adsorbing and removing adsorbates contained in a treatment solution.

For example, a method for purifying water is proposed in which a phyllosilicate is used as an adsorbent for adsorbing and removing contaminants (cesium etc.) in water (see Patent Document 1). A method for purifying oil is also proposed in which a clay mineral mainly composed of a hydrated aluminum silicate or its refined product is used as an adsorbent (inorganic powder) for adsorbing and removing food residue or eluted components in waste oil (cooking oil) (see Patent Document 2).

In the methods described in Patent Documents 1 and 2, it is necessary to use a particulate (powder) phyllosilicate in order to provide sufficient adsorption properties. The particulate (powder) phyllosilicate is less easy to handle as an adsorbent and it is troublesome to collect the adsorbent.

A fibrous adsorbent (deodorant) is also proposed which is produced by spinning a fiber material containing a thermoplastic polymer compound and an adsorbent for adsorbing odors. It is described that high deodorization efficiency is maintained for a long time by using such an adsorbent (see, e.g., Patent Document 3).

CITATION LIST

PATENT DOCUMENTS

PATENT DOCUMENT 1: Japanese Unexamined Patent Publication No. 2013-696
PATENT DOCUMENT 2: Japanese Patent No. 2959975
PATENT DOCUMENT 3: Japanese Unexamined Patent Publication N o. H02-157040

SUMMARY OF THE INVENTION

TECHNICAL PROBLEM

The fibers described in Patent Document 3 has the following problem. Since the adsorbent is covered by a hydrophobic polymer, the adsorbent does not have sufficient adsorption properties when used in, e.g., an aqueous solution.

SOLUTION TO THE PROBLEM

In order to achieve the above object, fibers based on poly(vinyl alcohol) according to the present invention is fibers based on poly(vinyl alcohol) composed of a poly(vinyl alcohol) polymer and a phyllosilicate. The fibers contain 30 to 400 parts by mass of the phyllosilicate per 100 parts by mass of the poly(vinyl alcohol) polymer and have a fiber swelling degree of 200 to 600%.

ADVANTAGES OF THE INVENTION

The present invention provides fibers based on poly(vinyl alcohol) with high adsorption properties.

BRIEF DESCRIPTION OF THE DRAWINGS

[FIG. 1] FIG. 1 is a scanning electron microscope (SEM) image of PVA fibers produced in Example 1.
[FIG. 2] FIG. 2 is a scanning electron microscope (SEM) image of PVA fibers produced in Example 2.

DESCRIPTION OF EMBODIMENTS

The present invention will be described in detail. Fibers based on poly(vinyl alcohol) of the present invention (hereinafter referred to as the "PVA fibers") are composed of a poly(vinyl alcohol) polymer (hereinafter referred to as the "PVA polymer") and a phyllosilicate.

<PVA Polymer>

The PVA polymer forming the PVA fibers of the present invention is not particularly limited as long as it is mainly composed of a vinyl alcohol unit. The PVA polymer may have any other structural unit. Examples of the structural unit include olefins such as ethylene, propylene, and butylene, acrylate esters such as acrylic acid and its salts and methyl acrylate, methacrylic acid esters such as methacrylic acid and its salts and methyl methacrylate, acrylamides, acrylamide derivatives such as N-methylacrylamide, methacrylamides, methacrylamide derivatives such as N-methylolmethacrylamide, N-vinylamides such as N-vinylpyrrolidone, N-vinylformamide, and N-vinylacetamide, allyl ethers having polyalkylene oxide in a side chain, vinyl ethers such as methyl vinyl ether, nitriles such as acrylonitrile, vinyl halides such as vinyl chloride, and unsaturated dicarboxylic acids such as maleic acid and its salts or its anhydrides and esters. Such a modified unit may be introduced using either copolymerization or a post-reaction.
The saponification degree of the PVA polymer of the present invention is not particularly limited but is preferably 98 mol% or more and more preferably 99 mol% or more in view of crystallinity and orientation of produced fibers. It is particularly preferable that the saponification degree of the PVA polymer of the present invention be 99.7 mol% or more because it has hot water resistance.
The polymerization degree of the PVA polymer of the present invention is also not particularly limited, but in view of mechanical properties, dimensional stability, etc. of produced fibers, it is desirable that the average polymerization degree obtained from the viscosity of a 30°C aqueous solution be 1,200 to 20,000. It is preferable to use a PVA polymer with a high polymerization degree because of its high strength, high moist heat resistance, etc., but it is particularly preferable that the average polymerization degree be 1,500 to 5,000 in view of cost for producing the polymer, cost for fiberization, etc.
The content of the PVA polymer in the entire PVA fibers is preferably in the range of 20 to 77 mass%. When the content of the PVA polymer is less than 20 mass%, it may be difficult to produce the PVA fibers. When the content of the PVA polymer is higher than 77 mass%, the PVA fibers may not have sufficient adsorption capability when used as an adsorbent.

<Phyllosilicate>

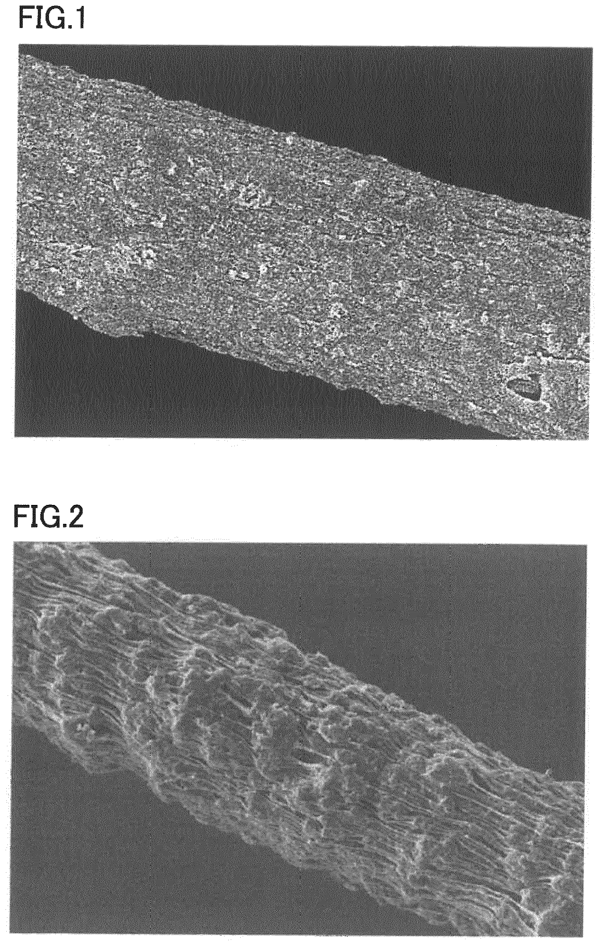

It is preferable that the phyllosilicate of the present invention have a layer charge of 0.2 to 2.0 and a cation exchange capacity of 50 to 200 meq/100 g.
Examples of the phyllosilicate include clay compounds based on smectites such as montmorillonite, saponite, beidellite, nontronite, hectorite, birosite, and stevensite (e.g., bentonite mainly composed of montmorillonite, etc.) and clay minerals such as micas. These phyllosilicates may be either natural or synthetic materials. In the present invention, these phyllosilicates may be used alone or in combination of two or more.
The PVA fibers of the present invention contain 30 to 400 parts by mass, preferably 60 to 300 parts by mass, of the phyllosilicate per 100 parts by mass of the PVA polymer. When the content of the phyllosilicate is less than 30 parts by mass, the PVA fibers has reduced permeability to a treatment solution due to high coverage of the phyllosilicate by the PVA polymer, and therefore the PVA fibers may not have sufficient adsorption properties for adsorbates in the treatment solution. When the content of the phyllosilicate is higher than 400 parts by mass, it may be difficult to form the shape of fibers (i.e., perform fiberization) for the PVA fibers, and a large amount of phyllosilicate may peel off from the PVA fibers into the treatment solution.
Accordingly, by setting the content of the phyllosilicate to 30 to 400 parts by mass per 100 parts by mass of the PVA polymer, fine pores for adsorbing adsorbates are formed with no phyllosilicate peeling off from the fibers into the treatment solution. PVA fibers with high adsorption properties are thus produced (see FIGS. 1 and 2 of examples described later).
The average particle size of the phyllosilicate is not particularly limited but is preferably 0.1 to 100 μm. When the average particle size of the phyllosilicate is less than 0.1 μm, fine pores are less likely to be formed in the fibers, and the fibers have reduced permeability to the treatment solution, which may result in degradation in adsorption properties of the phyllosilicate. When the average particle size of the phyllosilicate is larger than 100 μm, it may be difficult to form the shape of fibers for the PVA fibers, and a large amount of phyllosilicate may peel off from the PVA fibers into the treatment solution.
As used herein, the "average particle size" refers to 50% particle size (D50) and can be measured by a particle size analyzer using a laser doppler method (Nanotrac (registered trademark) particle size analyzer UPA-EX150 made by Nikkiso Co., Ltd.) etc.

<PVA Fibers>

The fiber swelling degree of the PVA fibers of the present invention is 200 to 600%. When the fiber swelling degree is less than 200%, the fibers have reduced permeability to the treatment solution, which may result in degradation in adsorption properties. When the fiber swelling degree is higher than 600%, the fibers themselves absorb a large amount of treatment solution. It is therefore difficult to collect or replace the fibers after an adsorption process due to their dimensional change associated with swelling. The PVA fibers with a fiber swelling degree of more than 600% are also less easy to handle due to elution of a PVA resin and the phyllosilicate being more likely to peel off from the PVA fibers. Such PVA fibers also have smaller voids through which the treatment liquid passes, and therefore has reduced liquid permeability.

Accordingly, by setting the fiber swelling degree of the PVA fibers to 200 to 600%, PVA fibers with high adsorption properties are produced without affecting ease of handling and causing reduction in liquid permeability.

As used herein, the "fiber swelling degree" refers to the swelling degree of the fibers which is calculated using Expression (1) below.

The single yarn fineness of the PVA fibers is preferably in the range of 2 to 600 dtex. The finer the fibers are, the larger the surface area of the fibers is and the more efficiently the PVA fibers adsorb adsorbates. However, when the single yarn fineness is less than 2 dtex, the PVA fibers are not strong enough and therefore may be less easy to handle. When the single yarn fineness is larger than 600 dtex, the PVA fibers do not have sufficient adsorption capability and may be less easy to handle due to their reduced flexibility.

The PVA fibers of the present invention are produced by solution spinning, specifically any of wet spinning, dry-wet spinning, and dry spinning, of a spinning dope containing the PVA polymer and the phyllosilicate. A solvent for the spinning dope is a solvent that is conventionally used to produce PVA fibers. For example, dimethyl sulfoxide (DMSO), dimethylformamide, dimethylacetamide, methanol, water, polyhydric alcohols such as glycerin, ethylene glycol, and triethylene glycol, diethylenetriamine, rhodan salts, etc. may be used alone or in combination of two or more as the solvent. Among these, DMSO and water are particularly preferred in view of availability and impact on environment. The polymer concentration in the spinning dope is typically in the range of 6 to 60 mass%, although it varies depending on the composition and polymerization degree of the PVA polymer and the solvent.

The spinning dope may contain, according to the application of the PVA fibers, an additive such as an antioxidant, an antifreeze, a pH adjuster, a masking agent, a colorant, or an oil, etc. in addition to the PVA polymer and the phyllosilicate as long as it does not affect the effects of the present invention.

The PVA fibers of the present invention can be used in various fiber forms such as staple fibers, short cut fibers, filament yarns, and spun yarns. The cross-sectional shape of the fibers is not particularly limited, and the PVA fibers of the present invention may have a circular cross section, a hollow cross section, or a modified cross section such as a star-shaped cross section.

The fibers of the present invention may be mixed or combined with other fibers. In this case, the fibers that can be combined with the fibers of the present invention are not particularly limited. Examples of such fibers include PVA fibers containing no layered clay compound, polyester fibers, polyamide fibers, and cellulose fibers. The fibers of the present invention may be used as fiber structures such as crimped cotton, woven fabric, nonwoven fabric, and paper.

The fiber structure of the present invention can be suitably used in various applications such as beverage, clothing, and medical applications. For example, the fiber structure of the present invention can be used for various adsorption filters composed of a fiber structure such as an adsorbent for adsorbing adsorbates in a treatment solution (e.g., an adsorption filter for removing caffeine from coffee extracts or green tea or an adsorption filter for removing proteins from alcohol or cooking oil), filaments, short cut fibers, crimped cotton, woven fabric, or paper, etc.

The PVA fibers of the present invention can be used when placing short fibers, namely short cut fibers, into a treatment solution tank for treatment, when forming crimped cotton into fiber rods and passing a treatment solution through the fiber rods for treatment, when forming filaments to form a wound cartridge and passing a treatment solution through the wound cartridge for treatment, and for example, when passing a treatment solution through a cylindrical or sheet-like woven or nonwoven fabric for treatment, etc.

Examples

The present invention will be described based on examples. The present invention is not limited to these examples, and these examples may be modified or varied based on the spirit and scope of the present invention. Such modifications and variations are not excluded from the scope of the present invention.

(Example 1)

<Preparation of PVA Fibers>

100 parts by mass of PVA with an average polymerization degree of 1,700 and a saponification degree of 99 mol% (trade name: PVA-117, made by Kuraray Co., Ltd.) and 100 parts by mass of bentonite (trade name: KUNIPIA F, average particle size: 1 $\mu$m, made by KUNIMINE INDUSTRIES CO., LTD.) were dispersed in 800 parts by mass of DMSO, and the resultant solution was heated in a nitrogen atmosphere at 105°C to dissolve the PVA. A spinning dope was thus prepared.

Next, the spinning dope thus prepared was dry-wet spun into a solidifying bath of 5°C methanol/DMSO (mass ratio: methanol/DMSO = 70/30) through a nozzle having 40 holes with a hole diameter of 0.15 mm.

The resultant solidified yarns were then wet-drawn at a draw ratio of 4 in a 20°C methanol bath and dried with 120°C hot air to produce fibers with a single yarn fineness of 12 dtex. The fibers thus produced were cut to 5 mm. Fibers (sample) of this example were thus produced.

<Evaluation of Spinnability>

Spinnability was evaluated according to the following evaluation criteria. The results are shown in Table 1.

Fibers were continuously formed for an hour or more by dry-wet spinning: ○

Fibers were not continuously formed for an hour or more by dry-wet spinning: ×

The sample prepared was observed with a scanning electron microscope (SEM). FIG. 1 shows a scanning electron microscope (SEM) image of the sample. It can be seen from FIG. 1 that the sample has a large number of micropores in its surface.

<Measurement of Swelling Degree>

The prepared sample (about 1g) was dried in a vacuum drier at 80°C for 24 hours and the weight of the absolute dry sample was measured. Next, this sample was immersed in a 20°C deionized water for 60 minutes. The sample was then removed by filtration and water on the surface of the sample was gently removed with filter paper. Thereafter, the weight of the sample after immersion was measured. The swelling degree of the prepared sample was then calculated using the following expression (1). The results are shown in Table 1.

[Expression 1]

$$\text{Swelling degree of sample (\%)} = (\text{sample weight after immersion/absolute dry sample weight}) \times 100 \qquad (1)$$

<Evaluation of Adsorption Properties>

The capability to remove methylene blue that is a water-soluble compound (adsorption ratio) was evaluated as an index of adsorption properties. More specifically, 1 mass% of the sample was added to 500 mL of an aqueous solution containing 100 ppm of methylene blue, and the resultant solution was stirred at 20°C for 60 minutes. Thereafter, the solution was collected and its maximum absorption wavelength at 664 nm was measured with a spectrophotometer (trade name: U-2001 Spectrophotometer, made by Hitachi, Ltd.) to calculate the methylene blue concentration after the treatment. The adsorption ratio of the prepared sample was calculated using the following expression (2). The results are shown in Table 1.

[Expression 2]

$$\text{Methylene blue adsorption ratio (\%)} = ((\text{methylene blue concentration in solution}$$

$$\text{before treatment} - \text{methylene blue concentration after treatment})/\text{methylene blue concentration}$$

$$\text{in solution before treatment}) \times 100 \qquad (2)$$

<Evaluation of Ease of Handling>

Supernatant liquid of the treatment solution was collected immediately after the evaluation of adsorption properties, and its turbidity (mg/L) was measured using a turbidimeter (2100P Portable Turbidimeter made by HACH). The results are shown in Table 1. The higher the turbidity is, the more difficult it is to collect the treatment solution and therefore the less easy the fibers are to handle.

(Example 2)

100 parts by mass of PVA with an average polymerization degree of 1,700 and a saponification degree of 99 mol% (trade name: PVA-117, made by Kuraray Co., Ltd.) and 300 parts by mass of bentonite (trade name: KUNIPIA F, average particle size: 1 $\mu$m, made by KUNIMINE INDUSTRIES CO., LTD.) were dispersed in 160 parts by mass of DMSO, and the resultant solution was heated in a nitrogen atmosphere at 105°C to dissolve the PVA. A spinning dope was thus prepared.

Next, the spinning dope thus prepared was dry-wet spun into a solidifying bath of 5°C methanol/DMSO (mass ratio: methanol/DMSO = 70/30) through a nozzle having 5 holes with a hole diameter of 1.00 mm.

The resultant solidified yarns were then wet-drawn at a draw ratio of 4 in a 20°C methanol bath and dried with 120°C hot air to produce fibers with a single yarn fineness of 150 dtex. The fibers thus produced were cut to 5 mm. Fibers (sample) of this example were thus produced.

The sample prepared was observed with a scanning electron microscope (SEM). FIG. 2 shows a scanning electron microscope (SEM) image of the sample. It can be seen from FIG. 2 that, like Example 1, the sample has a large number of micropores in its surface.

Evaluation of spinnability, measurement of the swelling degree, evaluation of adsorption properties, and evaluation of ease of handling were carried out in a manner similar to that of Example 1. The results are shown in Table 1.

(Example 3)

Fibers (sample) were prepared in a manner similar to that of Example 2 except that 300 parts by mass of synthetic mica (trade name: ME 100, average particle size: 5 $\mu$m, made by Coop Chemical Co., Ltd.) was used instead of the bentonite.

Evaluation of spinnability, measurement of the swelling degree, evaluation of adsorption properties, and evaluation of ease of handling were carried out in a manner similar to that of Example 1. The results are shown in Table 1.

(Example 4)

Fibers (sample) were prepared in a manner similar to that of Example 1 except that 60 parts by mass of bentonite was used.

Evaluation of spinnability, measurement of the swelling degree, evaluation of adsorption properties, and evaluation of ease of handling were carried out in a manner similar to that of Example 1. The results are shown in Table 1.

(Comparative Example 1)

Fibers (sample) were prepared in a manner similar to that of Example 1 except that 20 parts by mass of bentonite was used.

Evaluation of spinnability, measurement of the swelling degree, evaluation of adsorption properties, and evaluation of ease of handling were carried out in a manner similar to that of Example 1. The results are shown in Table 1.

(Comparative Example 2)

First, dry-wet spinning was performed in a manner similar to that of Example 1. The resultant spun yarns were drawn in a hot-air drawing furnace having a first furnace of 180°C and a second furnace of 235°C at an overall draw ratio (wet draw ratio × hot-air furnace draw ratio) of 10 to produce 5 dtex fibers. The fibers thus produced were cut to 5 mm. Fibers (sample) of this comparative example were thus produced.

Evaluation of spinnability, measurement of the swelling degree, evaluation of adsorption properties, and evaluation of ease of handling were carried out in a manner similar to that of Example 1. The results are shown in Table 1.

(Comparative Example 3)

Evaluation of adsorption properties and evaluation of ease of handling were carried out for 100 parts by mass of bentonite (powder) in a manner similar to that of Example 1. The results are shown in Table 1.

(Comparative Example 4)

Dry-wet spinning was performed in a manner similar to that of Example 2 except that 450 parts by mass of bentonite was used.

In this comparative example, fibers were not continuously formed in the dry-wet spinning. In this comparative example, since the content of bentonite (phyllosilicate) is higher than 400 parts by mass (450 parts by mass), it is difficult to form the shape of fibers (i.e., perform fiberization), and a large amount of bentonite peeled off from the fibers into the treatment solution. Accordingly, measurement of the swelling degree, evaluation of adsorption properties, and evaluation of ease of handling could not be carried out, as shown in Table 1.

(Comparative Example 5)

Fibers (sample) were prepared in a manner similar to that of Example 2 except that PVA with an average polymerization degree of 1,700 and a saponification degree of 96 mol% (trade name: PVA-CST, made by Kuraray Co., Ltd.) was used instead of the above PVA.

Evaluation of spinnability, measurement of the swelling degree, evaluation of adsorption properties, and evaluation of ease of handling were carried out in a manner similar to that of Example 1. The results are shown in Table 1.

[Table 1]

| | PVA | Phyllosilicate | | | Spinnability | Fineness (d tex) | Swelling Degree (%) | Adsorption Ratio (%) | Ease of Handling | |
|---|---|---|---|---|---|---|---|---|---|---|
| | Parts by Mass | Type | Parts by Mass | Average Particle Size($\mu$ m) | | | | | Turbidity (mg/L) | Result |
| Example 1 | 100 | Bentonite | 100 | 1 | ○ | 12 | 329 | 95 | 2 | ○ |
| Example 2 | 100 | Bentonite | 300 | 1 | ○ | 150 | 414 | 96 | 2 | ○ |
| Example 3 | 100 | Synthetic mica | 300 | 5 | ○ | 150 | 398 | 89 | 2 | ○ |
| Example 4 | 100 | Bentonite | 60 | 1 | ○ | 12 | 320 | 93 | 1 | ○ |
| Comparative Example 1 | 100 | Bentonite | 20 | 1 | ○ | 12 | 233 | 68 | 2 | ○ |
| Comparative Example 2 | 100 | Bentonite | 100 | 1 | ○ | 5 | 182 | 74 | 1 | ○ |
| Comparative Example 3 | 0 | Bentonite | 100 | 1 | - | - | - | 98 | 400 | × |
| Comparative Example 4 | 100 | Bentonite | 450 | 1 | × | - | - | - | - | - |
| Comparative Example 5 | 100 | Bentonite | 300 | 1 | ○ | 150 | 630 | 90 | 250 | × |

As shown in Table 1, the PVA fibers of Examples 1 to 4 contain 30 to 400 parts by mass of the phyllosilicate (bentonite or synthetic mica) per 100 parts by mass of PVA and have a fiber swelling degree of 200 to 600%, and therefore these PVA fibers of Examples 1 to 4 have high adsorption properties and are easy to handle.

On the other hand, the PVA fibers of Comparative Example 1 contains less than 30 parts by mass of bentonite. Accordingly, the PVA fibers of Comparative Example 1 has high coverage of bentonite by PVA and thus has reduced permeability to the treatment solution. As a result, the PVA fibers of Comparative Example 1 has degraded adsorption properties for methylene blue in the treatment solution.

The PVA fibers of Comparative Example 2 has a fiber swelling degree of less than 200% and therefore has reduced permeability to the treatment solution. As a result, the PVA fibers of Comparative Example 2 has degraded adsorption properties for methylene blue in the treatment solution.

Comparative Example 3 uses only bentonite and does not use PVA. Accordingly, bentonite is mixed into the treatment solution, and the treatment solution has increased turbidity. Comparative Example 3 is therefore less easy to handle.

The PVA fibers of Comparative Example 5 has a fiber swelling degree of higher than 600%. The PVA fibers of Comparative Example 5 are therefore less easy to handle due to elution of PVA and peeling-off of the silicate.

INDUSTRIAL APPLICABILITY

As described above, the present invention is suitable for fibers based on poly(vinyl alcohol) containing a phyllosilicate. Moreover, a fiber structure composed of the fibers based on poly(vinyl alcohol) of the present invention can be suitably used in various applications such as beverage, clothing, and medical applications.

**Claims**

1. Fibers based on poly(vinyl alcohol) composed of a poly(vinyl alcohol) polymer and a phyllosilicate, **characterized in that**
   the fibers contain 30 to 400 parts by mass of the phyllosilicate per 100 parts by mass of the poly(vinyl alcohol) polymer, and
   the fibers have a fiber swelling degree of 200 to 600%.

2. The fibers based on poly(vinyl alcohol) of claim 1, **characterized in that** the phyllosilicate is a smectite clay compound.

3. The fibers based on poly(vinyl alcohol) of claim 2, **characterized in that** the phyllosilicate is bentonite.

4. The fibers based on poly(vinyl alcohol) of any one of claims 1 to 3, **characterized in that**
   the phyllosilicate has an average particle size of 0.1 to 100 $\mu$m.

5. A fiber structure composed of the fibers based on poly(vinyl alcohol) of any one of claims 1 to 4.

6. The fiber structure of claim 5, **characterized by** being an adsorbent that adsorbs an adsorbate in a treatment solution.

7. The fiber structure of claim 6, **characterized in that** the adsorbate is caffeine.

FIG.1

FIG.2

## INTERNATIONAL SEARCH REPORT

| International application No. |
|---|
| PCT/JP2018/032017 |

**A. CLASSIFICATION OF SUBJECT MATTER**
Int. Cl. D01F6/50(2006.01)i, B01J20/12(2006.01)i, C02F1/28(2006.01)i

According to International Patent Classification (IPC) or to both national classification and IPC

**B. FIELDS SEARCHED**

Minimum documentation searched (classification system followed by classification symbols)
Int. Cl. D01F6/50, B01J20/12, C02F1/28

Documentation searched other than minimum documentation to the extent that such documents are included in the fields searched
Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2000-256474 A (KURIMOTO LTD.) 19 September 2000, claims, paragraphs [0018]-[0024] (Family: none) | 1-7 |
| A | US 4157275 A (ENGELHARD MINERALS & CHEMICALS CORPORATION) 05 June 1979, claims 1, 2, column 4, line 45 to column 5, line 25 (Family: none) | 1-7 |
| A | CN 103060940 A (CHINA PETROCHEMICAL.) 24 April 2013, claim 1 (Family: none) | 1-7 |
| A | JP 2013-234405 A (DAIWABO HOLDINGS CO., LTD.) 21 November 2013, claims 1, 2 (Family: none) | 1-7 |

☒ Further documents are listed in the continuation of Box C.  ☐ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19.10.2018 | 30.10.2018 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2018/032017

C (Continuation).    DOCUMENTS CONSIDERED TO BE RELEVANT

| Category* | Citation of document, with indication, where appropriate, of the relevant passages | Relevant to claim No. |
|---|---|---|
| A | JP 48-5686 A (KURARAY CO., LTD.) 24 January 1973, claim 1 (Family: none) | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013000696 A
- JP 2959975 B
- JP H02157040 B